# EUROPEAN PATENT SPECIFICATION

(11) **EP 0 152 768 B1**
(45) Date of publication and mention of the grant of the patent: **09.06.1993**
(21) Application number: 85100506.6
(22) Date of filing: 18.01.1985
(51) Int. Cl.: C04B 35/10, C01F 7/02, C09K 3/14, B24D 3/00

(54) **Abrasive grits or ceramic bodies and preparation thereof**
Schleifkörner oder Keramikkörper und Verfahren zu ihrer Herstellung
Grains abrasifs ou corps céramiques et leur procédé de fabrication

(30) Priority: 19.01.1984 US 572106; 23.03.1984 US 592689; 19.10.1984 US 662869
(43) Date of publication of application: 28.08.1985
(60) Divisional application: 89103599.0
(73) Proprietor: NORTON COMPANY, Worcester Massachusetts 01606 (US)
(72) Inventor: Cottringer, Thomas E., Niagara Falls Ontario (CA); van de Merwe, Ronald H., Niagara Falls Ontario (CA); Bauer, Ralph, Niagara Falls Ontario (CA)
(74) Representative: DIEHL GLAESER HILTL & PARTNER

(56) References cited:
- EP-A- 0 024 099
- EP-A- 0 168 606
- EP-A- 0 171 034
- EP-A- 0 172 764
- US-A- 3 108 888
- US-A- 3 183 071
- US-A- 3 808 015
- US-A- 3 853 688
- US-A- 3 909 991
- US-A- 3 953 561
- US-A- 4 252 544
- US-A- 4 314 827
- JOURNAL OF THE AMERICAN CERAMIC SOCIETY, vol. 67, no. 11, November 1984, pages C230-C231, Columbus, Ohio, US; M. KUMAGAI et al.: "Enhanced densification of boehmite sol-gels by alpha-alumina seeding"
- CHEMICAL ABSTRACTS, vol. 95, 1981, page 295, column 2, abstract no. 47832z, Columbus, Ohio, US; & BR-A-79 02 063 (COLOROBBIA BRASILEIRA PRODUTOS PARA CERAMICA LTDA) 21-10-1980
- Bull. of the Chem. Soc. of Japan, Vol. 36, No. 9, September 1963, p. 1155-1158, H. Yanagida and G. Yamaguchi, Corundum Alpha-Al203 Formation from the Dehydration of Alpha-Al00H under Hydrothermal Conditons
- J. Ceram. Assoc. Japan 74(3), 1966, p. 36-41, H. Yanagida and G. Yamaguchi, A Discussion on the Phase Diagram of the System Al203-H20 Considering the Transformation Mechanism of the Polymorphs Appearing in It
- Bull. of the Chem. Soc. of Japan, Vol. 38, No. 1, January 1965, p. 54-58, H. Yanagida, G. Yamaguchi and Takeshi Fujimaru, Corundum Alpha-Al203 Formation from the Dehydration of Alpha-A100H under Hydrothermal Conditions. II. The Reaction Rates and Mechanism
- Journal of Materials Science 11 (1976) 1794-1806, P.A. Badkar, J.E. Bailey, The mechnism of simultaneous sintering and phase transformation in alumina
- Journal of the American Ceramic Society, Vol. 65, No. 9, September 1982, p. 442-448, F.W. Dynys and J.W. Halloran, Alpha Alumina Formation in Alum-Derived Gamma Alumina

## Description

The invention relates to the production of aluminous abrasive grits, a method for producing as well as the use of same.

Hard and strong abrasive grits, for use in grinding wheels, flexible coated abrasive products ("sandpaper"), or as loose abrasive, are produced commercially from alumina containing raw materials either by fusion in an electric furnace or by the firing of shaped bodies containing finely divided alumina at temperatures well below the fusion points of the material. Such lower temperature process is called sintering. This invention relates to aluminous abrasives made by the sintering process.

The first large-scale commercially produced sintered abrasives were produced by the method taught in U.S. Patent 3,079,243 to Ueltz. This patent teaches the milling of calcined bauxite to produce a fine particle size raw material which is then formed into abrasive grit sized particles and fired at about 1500°C. to form hard, strong, tough, pellets of polycrystalline alumina.

Recently, abrasive materials consisting of grits made up of alumina and magnesia spinel, presumably made according to the teachings of U.S. Patent 4,314,827, and made according to the teaching of published British Application 2,099,012A, published 1 December 1982, have been commercially introduced. These materials are produced by the sintering (at about 1400°C.) of dried alumina gel particles. U.S. Patent 3,108,888 to Bugosh also teaches making high density alumina (or alumina containing) products by firing a dried alumina gel made from alpha alumina monohydrate (boehmite) or by hot pressing dried powders made from such gels.

Alumina/magnesia-spinel commercial abrasives made from gels contain alumina in the form of cells from 5 to 15 microns in diameter. The cells, or "sunbursts", are made up of many elongated alumina arms 0.2 to 0.4 micrometers in diameter (but some of which can be as large as 1 micrometer in the form of very roughly spherical "blobs"), the arms in each cell appearing generally to radiate from the center of the cell. All of the arms in a given cell are apparently crystallographically identically oriented. Such orientation is shown by the fact all the area of a given cell extinguishes simultaneously upon sample rotation when viewed between crossed polarizers by transmitted light microscopy.

While the commercial abrasives made from sintered gels containing alumina and magnesia are high quality abrasives, it has not been possible to produce high purity alumina grits by the gel route. This is shown by the relative softness and lack of abrasive utility for the "control" example 13 in U.S. Patent 4,314,827 which was made from an alumina gel without metal oxide or metal salt additions.

In US-A-4 252 544 alumina abrasive grains are disclosed, wherein the grain structure is constructed of alumina coarse crystal particles of sizes in the range of 3 to 10 µm and alumina fine crystal particles of sizes smaller than 2 µm. The fine crystals are interposed among the coarse crystal particles. The coarse particles present up to 60 weight % in the abrasive grains, represent the essential grinding compound. The fine particles having a size below 2 µm and being made of electro fused alumina only form the matrix for the coarse particles having a size of 3 to 10 µm. Further, the fine particles act as a filler material for the abrasive grains to obtain a high density of more than 3.75 g/cm³. A Knoop hardness of 200 kg/mm² can only be obtained if the mean fine particle size is 1.3 µm or above.

US-A-3 909 991 describes a method of manufacturing sintered abrasive grains employing isostatic hot pressing. The abrasive grains are preshaped from a base refractory material selected from the group consisting of bauxite, spinel, alpha-alumina, zirconia and mixtures thereof, having an average particle size of less than 1 µm, and then the preshaped particles are hot-pressed while suspended in a high temperature isostatic pressing medium like graphite, boron nitride or the like. The resulting sintered particles have e.g. a specific gravity of 3.86 g/cm³ and an average crystal size of less than 0.5 µm. This document, however, is silent about any hardness values of the abrasive grains. Comparative tests conducted according to the teaching of US-A-3 909 991 showed that the abrasive grains produced had a hardness of below 16 GPa, if the grain size was below 1 µm. Higher hardnesses could only be obtained by allowing substantial growing of the particles. It was not possible to obtain both high hardness above 16 GPa and non-growing, submicron sized particles at the same time.

It is the object of the present invention to provide an improvement in the art of making strong abrasive bodies whereby useful abrasive products can be made from alumina gel with or without the addition of grain growth inhibitors. The invention therefore provides an aluminous abrasive grit as described in the independent claim 1, a method of making same as described in independent claim 9, and a use of the grit as described in independent claim 14. Further advantageous features of the invention are evident from the dependent claims.
According to a first aspect, the invention provides aluminous abrasive grits of a high density polycrystalline phase consisting of submicron equiaxed alpha alumina crystallite and impurities, whereby the grits have a density of greater than 90% of theoretical density and a hardness of at least 18 GPa. Optionally the grits may contain additives selected from the group consisting of zirconia, magnesia present as a spinel and chromiumoxide.

The method of making aluminous abrasive grits according to the above mentioned first and second aspects comprises drying, crushing and sintering a hydrated alumina gel, characterized in that to the gel or gel precursor submicron sized α-Al₂0₃ particles are added.
The above method may be carried out by providing a dispersion of non-alpha alumina particles of submicron size said dispersion including submicron alpha alumina seed particles, drying said dispersion and firing said dispersion. By this means, the non-alpha alumina particles are converted to alpha alumina particles of a submicron size. The resulting body has a density of at least 90% of theoretical and a hardness of at least 18 GPa.

The abrasive grits can be produced from a dried aqueous dispersion of alumina monohydrate containing submicron alpha alumina crystals in an amount and fineness sufficient to effect transformation of said monohydrate to alpha alumina.
The aluminous abrasive grits having a high density polycrystallite phase may be produced by fine alumina particles in a form having theoretical density less than that of alpha alumina. Then submicron alpha alumina seed material is mixed with said fine alumina particles and they are fired to a temperature of at least 1090°C whereby the fine alumina particles are converted to alpha alumina and a body having a hardness of at least 18 GPa is produced.
According to a further aspect of the invention, the aluminous abrasive grits according to the first and second aspects as well as produced according to the above mentioned method, may be used in a vitrified grinding wheel, a flexible abrasive disc, in coated abrasives or in vulcanized fiber-backed coated abrasive grits.

The invention resides in the discovery that control of the microstructure of the fired product, such that the cellular structure of the alumina in the prior art abrasives is avoided, results in improved product performance. The resulting product, instead of cell areas of 5 to 10 micrometers in diameter, contains alpha alumina particles (crystallites) of submicron size (0.2 to 0.4 micrometers).

When higher MgO amounts e.g. in some cases at 5%, are added, these alumina particles are surrounded by a matrix of spinel.

Conditioning of the gel to achieve the described effect can be achieved by vibratory milling of the mix in the sol or diluted gel form while employing alumina bodies as the grinding medium in the mill. It is believed that the main effect of the milling is to introduce material from the alumina grinding media into the alumina gel. Also impurities such as zinc and iron are introduced from the piping and associated equipment. Milling with zirconia bodies, for example, is ineffective to produce the desired essentially non-cellular structure.

The first effective and reproducable method found by us was to generate such material in the gel by vibratory milling of the gel with alumina bodies. A suitable vibratory mill is shown in U.S. Patent 3,100,088. Typically the media may be 1.27 cm (1/2 inch) in diameter and 1.27 to 1.90 cm (1/2 to 3/4 inches) long. The tub which contains the media and the mix is vibrated in the horizontal plane by an off-balance weight connected to the shaft of a motor mounted coaxially with the tub which is mounted on springs. The off-balance weight is mounted adjacent the plane of the bottom of the tub and a second weight is mounted below it. The motor typically rotates at 1200 rpm. The combined oscillation subjects the contents to a milling action by the grinding media. The interior surface of the mill is preferably lined, as with rubber, to prevent contamination by erosion of the metal walls.

Various additives such as taught in U.S. Patent 4,314,827 and British Application 2,099,012A can be added to the alumina before or after gelling. The most useful additive presently known is any compatible precursor of MgO, whereby the final product contains preferably around 5% MgO. The MgO is present, however, in the product as spinel (magnesium aluminate: MgAl₂O₄) but calculated as MgO in the analysis. Obviously lesser amounts of MgO may be included since the alumina with no addition is an excellent abrasive in its own right when produced according to the present invention. The milled gel of the present invention may serve as a matrix for various added materials or abrasive particles.

The milled mix may be simply poured or placed into containers to dry and then broken up into appropriate sized pieces by crushing, with undersized material recycled to the beginning of the process. Alternatively, the material may be formed or molded into shaped particles as by extrusion. In the case of extrusion, the rods formed would later be cut or broken into appropriately sized pieces. The minimum useful firing temperature is significantly below 1200°C., usually considered the transformation point to convert to alpha alumina. The upper limit is not critical so long as the fusion temperature is not reached. Too long a firing or too high a temperature can cause excessive crystal growth. Higher temperatures increase the cost of the process also, so the preferred firing range is 1200 to 1500°C.

### EXAMPLE I

In a large polymeric plastic mixing vessel 13.6 kg (30 pounds) of Condea SB Pural Alumina (supplied by Condea) and 136 liters (30 imperial gallons) of water were mixed. This material was then gelled by adding 4.1 liters of 14 weight % HNO₃. 3.4 kg (7.5 pounds) of Magnesium nitrate hydrate dissolved in 13.7 liters ( 3 gallons) of water was then added to the alumina gel to give 5% by weight of MgO in the final product. It was mixed for 15 minutes and transferred to a Model M451 Sweco mill and milled for 1 hour with 772 kg (1700 lbs) of alumina media. The mix was recirculated through the mill for the one hour milling time at a rate of about 18 liters (4 gal.) per minute. After milling it was pumped into aluminum trays to a thickness of about 7.6 cm (3 inches) for drying on electric strip dryers.

The alumina media composition was about 90% alpha alumina with silica as the main impurity.

A series of batches according to the above formulation were made up and combined for crushing and firing.

The dried gel was then roll crushed and screened to a through 14 mesh sizing before firing to yield the desired final grit sizes. It was then prefired at 400°C. for 16 hours and fired at 1400°C. for 30 minutes in a rotary kiln.

After firing all of the products had a hardness of 19 GPa (Vickers indenter, 500g load) and a very fine microstructure in which there was no cellular microstructure and, almost all of the alpha alumina was in the form of generally equiaxed particles (crystallites), 0.2 to 0.4 µm (microns) in diameter, except for rare square blocky shapes about 5 µm (microns) in diameter. The blocky shapes may have indicated contamination. The product, upon examination by the scanning electron microscope was seen to be comprised of a spinel matrix and a discontinuous phase of alpha-alumina.

In some specific coated abrasive grinding applications the material was superior to fused alumina-zirconia and superior to commercially available sintered gel type abrasive of the alumina-spinel composition.

### EXAMPLE II

Pural microcrystalline boehmite alumina, 22.7 kilograms, was mixed with 225 liters of water and 13.5 liters of 14% HNO₃ for 10 to 15 minutes.

One half of the gel mixture was milled for 2 hours in the Sweco mill containing 1.27 x 1.27 cm (1/2 x 1/2 inch ceramic bonded alumina, 88% Al₂O₃ (the main impurities being MgO 1.74%, SiO₂ 8.9%, Fe₂O₃ 0.18%, TiO₂ 0.2%, CaO 0.8%, Na₂O 0.34%), available from Coors Porcelain Co., and dried. This was the same media as used in Example I. The other half was simply dried without milling. The dried gels were crushed to size, prefired at 450°C. for 16 hours and fired at 1400°C. for 1 hour.

The milled material had a hardness of 19.1 GPa, the unmilled material had a hardness of 11.0 GPa.

Material from each batch was screened to produce 50 grit abrasive grains which were then used to produce vulcanized fiber backed coated abrasive discs. The milled material outperformed commercial alumina zirconia abrasive by better than 10% in grinding 1020 steel (the test showed a 14% higher metal removal).

The unmilled product was inferior to fused abrasive in all grinding tests, which was to be expected in view of its low hardness.

### EXAMPLE III

In an example similar to that of the milled product of Example I, the gel was milled for 0.2 hours. The product, fired at 1400°C. for one hour, was mainly of the fine random 0.2 to 0.3 mm crystal structure, but showed some cellular appearance.

### EXAMPLES IV TO IX

Further examples were performed in a study of the effect of firing time at 1400°C. All samples were made by the general procedure of Example I. Condea microcrystalline boehmite alumina was employed, milling was for two hours, but after drying, the gels were prefired at 750°C. for 30 minutes. As the firing time was increased, there began to appear in the product a coarse lath shaped crystallization of alumina, randomly dispersed among the fine 0.2 to 0.4 micrometer alumina particles.

The results are tabulated as follows:

| Particle Size | | | |
|---|---|---|---|
| Firing Time (minutes) | (Micrometers) | | % Ratio Coarse/Coarse and Fine |
| | Coarse | Fine | |
| 1 | None | 0.2-0.3 | 0 |
| 3 | 1.0-2.0 | 0.2-0.3 | 5 |
| 5 | 2 - 5 | 0.2-0.3 | 20 |
| 10 | 4 - 8 | 0.2-0.3 | 50 |
| 30 | Up to 8 | 0.2-0.3 | 80 |
| 60 | Up to 8 | 0.2-0.3 | 95 |

Since the presence of the coarse fraction is believed to be less desireable, the firing time at 1400°C. should not be more than 5 minutes for the preferred product when the material is prefired at 750°C. for 30 minutes.

In all cases, no cellular structure was observed. The microstructures consisted of the non-faceted submicron particles and the faceted lath-like coarse crystals, except in the case of the 1 minute firing where no laths were found.

By "non-faceted" we mean no regular faceting of the crystallites was observed in a fractured surface at 5,000X magnification by the scanning electron microscope. The particles of alpha alumina were, instead, rather formless, but equiaxed, with generally curved outlines, and very few apparent straight outlines. At 20,000X magnification faceted structure begins to be clearly apparent.

The abrasive grits of this invention have a hardness measured by the Vickers indenter with a 500 gram load of at least 18 GPa (90% theoretical density) for alumina without additions and also at least 18 GPa for the grits which are modified by the presence of spinel formers or are modified by other additives. While pure dense alpha alumina has a hardness of about 20-21 GPa, some porosity may be desireable for certain applications which would lower the hardness. When the alumina has a hardness of less than 18 GPa, it is too porous for the purposes of this invention. Therefore the hardnesses are at least 18 GPa or higher as measured by the Vickers indenter at a 500g load.

### EXAMPLE X

A series of abrasives of varying magnesia content were made.

The general procedures of Example I were employed, including the milling (but for 2 hours) with alumina media. In all cases the gels, after drying at 200°C. for about 30 hours, were crushed and screened and then calcined at 450°C. for 16 hours. The resulting grit sized particles were fired in a rotary kiln at 1400°C. The heat-up time to 1400°C. was about 15 minutes, and the time at 1400°C. was about 15 minutes.

Various amounts of magnesium nitrate were added prior to the gelling. In one run no magnesium nitrate was added. The MgO content and hardness of the abrasives were as follows:

| Run No. | MgO Content % by Wgt. | Hardness (Vickers 500 g load) |
|---|---|---|
| 9498 | 0.14 | 19.9 |
| 9499 | 2.50 | 19 |
| 9500 | 7.95 | 19 |
| 9502 | 12.71 | 19 |

In a series of tests of vitrified (glass bonded) grinding wheels employing 54 grit (a combination of 46 grit and 60 grit sizes) sized abrasive wheels made with the above grits were compared with the highest quality known fused alumina abrasive (sulfide process abrasive).

The tests were carried out by grinding slots in tool steel (D3) at various controlled in-feeds. In dry grinding, at 12.7 µm (0.5 mils: .0005 inches) downfeed, the abrasive containing no added MgO (0.14% MgO) had a grinding ratio 16.18 times the grinding ratio of the fused abrasive (G ratio is the volumetric ratio of material removed to wheel wear). All of the MgO additions resulted in superior performance over the fused abrasive in the dry grinding tests. In the wet grinding tests the experimental abrasives with MgO added were poorer than or equal to the fused abrasive. At 50.8 µm (2 mils) the no-magnesia-addition abrasive was superior to the fused.

In coated abrasive tests employing 50 grit size abrasive (CAMI standard) an abrasive made according to Example X, and containing 0.6% MgO, incorporated into flexible abrasive discs performed better (136%) than co-fused alumina zirconia abrasive on 1020 steel and almost equivalent to fused alumina-zirconia on stainless steel. The abrasives containing 2.5% MgO and 7.59% MgO were also superior on 1020 steel. The higher MgO addition was less effective on stainless.

The 0.14% MgO abrasive contained, in addition to the alumina: 0.25% SiO₂, 0.18% Fe₂O₃, 0.28% TiO₂, 0.05% CaO, and 0.04% Na₂O, presumably mainly introduced in the milling operation. Similar levels of these impurities were present in the other abrasives.

While applicants do not wish to be bound by any particular theory of the invention, it is believed that the introduction from the alumina media of particulate matter may effect seeding of the crystallization of alpha alumina during the firing. Additionally, the other impurities introduced in the milling step may inhibit crystal growth of the final product by their presence at grain boundaries between the alpha alumina particles.

As evidence of the fact that it is the debris from the milling media which is effective to condition the gel so that it produces the desired high density, finely crystalline, non-cellular alpha alumina upon firing at about 1400°C., additions of milled water were made to alumina monohydrate together with acid, without milling of the gel.

Water, nitric acid, and microcrystalline boehmite were mixed, as in Example II, except that 6 batches were made, with varying additions of water containing the debris worn from alumina grinding media, when milled for several hours with water (no other addition to the water), as follows:
"Milled water" additions to alumina monohydrate (Condea):

| Trial | Wt.Ratio of milling debris to alumina monohydrate | Wt. % Debris in fired product* | Hardness GPa |
|---|---|---|---|
| 1. | 0.0074 | 1.07 | 20+ |
| 2. | 0.0037 | 0.53 | 20 |
| 3. | 0.0019 | 0.27 | 19+ |
| 4. | 0 | 0 | 12.5 |

| | | | |
|---|---|---|---|
| *Note: Assuming an average loss of weight in firing of 30%. | | | |

The hardness was determined on the fired product, fired at 1400°C. ± 20°C., for about 10 minutes. The furnace was electrically fired, the atmosphere was air.

Examination of the milled debris showed it to be mostly alpha alumina with a surface area of about 39 square meters/gram.

High purity alumina produced by recovery of the fine suspended alumina particles left in suspension when very fine alumina powders are permitted to settle after being mixed with water is also effective, when used in an amount of at least about 0.1% of the fired gel solids.

Tests with commercial fine alpha alumina powders, and tests with fine alumina generated by milling very high purity fused alumina, using such alumina itself as a milling medium, were very effective in producing the dense finely crystalline product of the invention.

Differential thermal analysis has shown that, when the alpha alumina seed particles are present the transition of the gel alumina from presumably the gamma form to the alpha form takes place at about 1090°C., while, in the absence of such seed material the transition takes place at about 1190°C. Thus, the theoretical minimum firing temperature of the products of the present invention can be below the usual reported transformation temperature.

This invention, for the first time, permits the manufacture by low temperature sintering of high purity alpha alumina bodies having a submicron particle size and a density of greater than 95%, resulting in a hardness greater than 18 GPa. Products other than abrasive, such as coatings, thin films, fibers, rods, or small shaped parts, can be made by the process of the present invention.

Grain growth inhibitors such as Cr₂O₃, MgO, and ZrO₂, have been added to the conditioned gel. In the experiments in which MgO was added there was reaction with the alpha alumina and spinel was formed and was observed as surrounding the remaining unreacted alpha alumina. It was assumed that with the other additives compound formation with the alpha alumina was minimal and they remained in the crystal boundaries. The experiments which have been run clearly show that the crystal growth by diffusion and recrystallization was suppressed by the additives. This has value in allowing more flexibility in the time-temperature relationships for the sintered products. The use of the growth inhibitors are well known in ceramic technology and are not a necessary part of the invention but are very useful to maintain the desired microstructure over a broad range of sintering time-temperature and where the high purity of alpha alumina is not a requirement.

## Claims

1. Aluminous abrasive grits, of a high density polycrystalline phase consisting of submicron equiaxed α-Al₂0₃ crystalites, and impurities, said grits having a density of greater than 90% of theoretical density and a hardness of at least 18 GPa optionally containing additives of zirconia, magnesia present as spinel and chromiumoxide.

2. Aluminous abrasive grits of claim 1 in which the impurities contain zinc and iron.

3. Aluminous abrasive grits of one of claims 1 or 2 in which up to about 12% of the α-Al₂0₃ is substituted by MgO, present as spinel.

4. Aluminous abrasive grits of one of claims 1 to 3 obtainable by a sol/gel process in which to the gel or gel precursor, submicron sized α-Al₂0₃ particles have been added.

5. Aluminous abrasive grits of one of claims 1 to 4 obtainable by a sol/gel process in which the alumina gel is conditioned by vibratory milling the mix in the sol or diluted gel form while employing alumina bodies as the grinding media in the mill.

6. Aluminous abrasive grits of one of claims 1 to 5, obtainable by a sol/gel process in which the gel is conditioned by means of an addition of water milled with alumina bodies as the grinding media in the mill.

7. Aluminous abrasive grits of claim 5 or 6 in which the alumina grinding bodies contain about 88% α-Al₂0₃.

8. Aluminous abrasive grits of one of claims 1 to 7 in which the submicron of α-Al₂0₃ crystalites have a size of 0.2 to 0.4 µm.

9. A method for making aluminous abrasive grits according to any one of claims 1 to 8 containing high density polycrystalline alpha alumina by drying, crushing and sintering a hydrated alumina gel, characterized by adding submicron sized α-Al₂0₃ particles to the gel or gel precursor.

10. A method of claim 9, characterized in that the mix in the sol or diluted gel form is milled while employing alumina bodies as the grinding media in the mill.

11. A method of claim 9 or 10 characterized in that water milled with alumina bodies as the grinding media in the mill is added to the sol or diluted gel.

12. A method of claim 9 characterized in that fine α-alumina powder is added.

13. The method of one of claims 9 to 12, characterized in that the material is screened and/or prefired at 400°C before actually firing it at sintering temperature.

14. Use of the aluminous abrasive grits according to one of claims 1 to 8, or made according to claims 9 to 13, in a vitrified grinding wheel or in a flexible abrasive disc or in coated abrasives or in vulcanized fiber-backed coated abrasive discs.

## Patentansprüche

1. Aluminiumhaltige Schleifkörner einer hochdichten, polykristallinen Phase, die aus gleichgerichteten α-Al₂O₃-Kristalliten von Submikrongröße und Verunreinigungen besteht, wobei die Körner eine Dichte von über 90% der theoretischen Dichte und eine Härte von mindestens 18 GPa aufweisen und gegebenenfalls Zusätze von Zirkonoxid, Magnesiumoxid, als Spinell vorliegend, und Chromoxid enthalten.

2. Aluminiumhaltige Schleifkörner nach Anspruch 1, bei denen die Verunreinigung Zink und Eisen enthalten.

3. Aluminiumhaltige Schleifkörner nach einem der Ansprüche 1 oder 2, bei denen bis zu 12% des α-Al₂O₃ durch MgO, als Spinell vorliegend, ersetzt sind.

4. Aluminiumhaltige Schleifkörner nach einem der Ansprüche 1 bis 3, erhältlich durch ein Sol/Gel-Verfahren, bei dem dem Gel oder Gelvorläufer α-Al₂O₃-Teilchen von Submikrongröße hinzugegeben werden.

5. Aluminiumhaltige Schleifkörner nach einem der Ansprüche 1 bis 4, erhältlich durch ein Sol/Gel-Verfahren, bei dem das Aluminiumoxidgel durch Vibrationsmahlen des Gemisches in Form eines Sols oder verdünnten Gels unter Verwendung von Aluminiumoxidkörpern als Mahlkörper in der Mühle konditioniert wird.

6. Aluminiumhaltige Schleifkörner nach einem der Ansprüche 1 bis 5, erhältlich durch ein Sol/Gel-Verfahren, bei dem das Gel durch Zugabe von Wasser, das mit Aluminiumoxid-Körpern als Mahlmedium in der Mühle vermahlen wird, konditioniert wird.

7. Aluminiumhaltige Schleifkörner nach Anspruch 5 oder 6, wobei die Aluminiumoxid-Schleifkörper ca. 88% α-Al₂O₃ enthalten.

8. Aluminiumhaltige Schleifkörner nach einem der Ansprüche 1 bis 7, in denen die α-Al₂O₃-Kristallite von Submikrongröße eine Größe von 0,2 bis 0,4 µm aufweisen.

9. Verfahren zur Herstellung Aluminiumhaltiger Schleifkörner nach einem der Ansprüche 1 bis 8, welche hochdichtes polykristallines α-Aluminiumoxid enthalten, durch das Trocknen, Zerkleinern und Sintern eines hydrierten Aluminiumoxidgels, dadurch gekennzeichnet, daß dem Gel oder Gelvorläufer α-Al₂O₃-Teilchen in Submikrongröße zugegeben werden.

10. Verfahren nach Anspruch 9, dadurch gekennzeichnet, daß das Gemisch in Form eines Sols oder verdünnten Gels unter Verwendung von Aluminiumoxidkörpern als Mahlkörper in der Mühle gemahlen wird.

11. Verfahren nach Anspruch 9 oder 10, dadurch gekennzeichnet, daß Wasser, vermahlen mit Aluminiumoxidkörpern als Mahlkörper in der Mühle, dem Sol oder verdünnten Gel zugegeben wird.

12. Verfahren nach Anspruch 9, dadurch gekennzeichnet, daß feines α-Aluminiumoxidpulver hinzugefügt wird.

13. Verfahren nach einem der Ansprüche 9 bis 12, dadurch gekennzeichnet, daß das Material gesiebt und/oder bei 400°C vorgebrannt wird, bevor es schließlich bei Sintertemperatur gebrannt wird.

14. Verwendung der aluminiumhaltigen Schleifkörner nach einem der Ansprüche 1 bis 8 oder hergestellt nach einem der Ansprüche 9 bis 13, in einer gesinterten Schleifscheibe oder einem flexiblen Schleifblatt oder in beschichteten, schleifend wirkenden Stoffen oder in vulkanisierten, faserverstärkten beschichteten Schleifblättern.

## Revendications

1. Grains abrasifs alumineux, ayant une phase polycristalline haute densité comprenant des cristallites d'alpha-Al₂0₃ équiaxes d'une taille inférieure au micron, et des impuretés, lesdits grains ayant une densité supérieure à 90 % de la densité théorique et une dureté d'au moins 18 GPa, et contenant facultativement de l'oxyde de zirconium, de la magnésie sous forme de spinelle et de l'oxyde de chrome, comme additifs.

2. Grains abrasifs alumineux selon la revendication 1, dans lesquels les impuretés contiennent du zinc et du fer.

3. Grains abrasifs alumineux selon une des revendications 1 ou 2, dans lesquels jusqu'à environ 12 % de l'alpha-Al₂0₃ sont remplacés par du MgO, présent sous la forme de spinelle.

4. Grains abrasifs alumineux selon l'une des revendications 1 à 3, pouvant être obtenus par un procédé sol/gel dans lequel il est ajouté au gel ou au précurseur de gel, des particules d'alpha-Al₂0₃ d'une taille inférieure au micron.

5. Grains abrasifs alumineux selon l'une des revendications 1 à 4, pouvant être obtenus par un procédé sol/gel dans lequel le gel d'alumine est conditionné en faisant subir un broyage vibratoire au mélange sous la forme de sol ou la forme de gel dilué, tout en employant des corps d'alumine comme milieu de broyage dans le broyeur.

6. Grains abrasifs alumineux selon l'une des revendications 1 à 5, pouvant être obtenus par un procédé sol/gel dans lequel le gel d'alumine est conditionné au moyen d'une addition d'eau broyée avec des corps d'alumine comme milieu de broyage dans le broyeur.

7. Grains abrasifs alumineux selon la revendication 5 ou 6 dans lesquels les corps d'alumine de broyage contiennent environ 88 % d'alpha-Al₂0₃.

8. Grains abrasifs alumineux selon l'une des revendications 1 à 7, dans lesquels les cristallites d'alpha-Al₂0₃ d'une taille inférieure au micron ont une taille de 0,2 à 0,4 micromètre.

9. Procédé de fabrication de grains abrasifs alumineux selon l'une des revendications 1 à 8, contenant de l'alpha-alumine polycristalline haute densité, par séchage, concassage et frittage d'une alumine hydratée, caractérisé par l'addition de particules d'alpha-Al₂0₃ d'une taille inférieure au micron au gel ou au précurseur de gel.

10. Procédé selon la revendication 9, caractérisé en ce que le mélange, sous la forme d'un sol ou d'un gel dilué, est broyé tout en employant des corps d'alumine comme milieu de broyage dans le broyeur.

11. Procédé selon la revendication 9 ou 10, caractérisé en ce que l'on ajoute au sol ou au gel dilué, de l'eau avec les corps d'alumine comme milieu de broyage dans le broyeur.

12. Procédé selon la revendication 9, caractérisé en ce que l'on ajoute de la poudre fine d'alpha-alumine.

13. Procédé selon l'une des revendications 9 à 12, caractérisé en ce que le matériau est passé au crible et/ou précuit à 400°C avant sa cuisson réelle à la température de frittage.

14. Utilisation des grains abrasifs alumineux selon l'une des revendications 1 à 8, ou fabriqués selon les revendications 9 à 13, dans une meule vitrifiée ou un disque abrasif souple ou des abrasifs en feuilles ou des disques abrasifs doublés d'un revêtement de fibres et vulcanisés.
